# EUROPÄISCHE PATENTSCHRIFT

(11) **EP 1 698 872 B1**
(45) Veröffentlichungstag und Bekanntmachung des Hinweises auf die Patenterteilung: **10.10.2007**
(21) Anmeldenummer: 05101587.3
(22) Anmeldetag: 02.03.2005
(51) Int. Cl.: G01G 21/24

(54) **Vorrichtung zum Wiegen gleichgearteter Wägegüter**
Device for weighing homogeneous products
Dispositif pour peser des produits homogènes

(43) Veröffentlichungstag der Anmeldung: 06.09.2006
(73) Patentinhaber: Mettler-Toledo AG, 8606 Greifensee (CH)
(72) Erfinder: Schilling, Peter, 8854 Siebnen (CH); Meyerhans, Dominic, 8606 Nänikon (CH); Metzger, Andreas, 8708 Männedorf (CH); Schütz, Marcel, 8610 Uster (CH); Scheu, Matthias, 8610 Uster (CH); Emery, Jean-Christophe, 8005 Zürich (CH)

(56) Entgegenhaltungen:
- DE-A1- 10 242 118
- DE-A1- 19 920 494
- US-A1- 2003 218 467
- US-B1- 6 615 638

## Beschreibung

Die Erfindung betrifft eine Vorrichtung zum Wiegen gleichgearteter Wägegüter mit einer Mehrzahl von Wägemodulen und mit einer gleichen Anzahl von eine in Lastrichtung verlaufende Mittellängsachse aufweisenden Lastträgern, wobei jeder Lastträger mit jeweils einem Wägemodul verbunden ist, und wobei die Lastträger sich in einer vorgegebenen räumlichen oder flächigen Anordnung befinden, in welcher die Abstände benachbarter Mittellängsachsen kleiner als die maximale Längsausdehnung eines Wägemoduls ist.

Eine solche Vorrichtung findet bevorzugt in automatisierten Produktions- und Testanlagen ihren Einsatz, wobei für eine Integration in diese Anlagen insbesondere Waagen in modularer Ausführung - so genannte Wägemodule - geeignet sind. Dabei handelt es sich im Wesentlichen um Waagen, bei denen die Anzeigeeinheit von der Waage getrennt angeordnet ist, beispielsweise in einer Anlage mit einer zentralen Anzeige für mehrere Wägemodule. Anstatt einer Anzeige kann das Wägeergebnis von den Wägemodulen auch einem Prozessleitsystem zugeführt werden. Ein Einsatz von solch integrierten Wägemodulen findet bevorzugt in Anlagen für die Produktion und Überprüfung von kleinen, relativ teueren Teilen statt, beispielsweise in Abfüll- und Verpackungsmaschinen für Tabletten, Kapseln, Ampullen, etc. in der Pharmaindustrie, oder bei der Kontrolle von Kugellagern.

Wenn das schnelle Messen der Einzelmassen von Wägegütern wichtig ist, bietet sich eine Anordnung mehrerer Wägemodule an, um beispielsweise das parallele Messen der Einzelmassen gleichgearteter Wägegüter zu ermöglichen. Da in der Regel diese Wägegüter mittels einer Beschickungsvorrichtung, beispielsweise einem Roboterarm mit Mehrfachgreifern parallel auf die einzelnen Lastträger der Wägemodule aufgebracht beziehungsweise nach dem Wägevorgang wieder entfernt werden, müssen die Positionen der einzelnen Lastträger zueinander und gegenüber der Beschickungsevorrichtung genau und dauerhaft positioniert sein.

Derartige Vorrichtungen zum Wiegen gleichgearteter Wägegüter sind im Stand der Technik bekannt. Dabei handelt es sich vorwiegend um Reihen- oder Flächenanordnungen von Wägemodulen. Weitere Anordnungen stellen darauf ab, die Wägemodule in einer Flächenanordnung sternförmig um eine Reihenanordnung von Lastträgern, welche an die Abstände der Zufuhrelemente einer meist vorhandenen Beschickungsvorrichtung anzupassen sind, zu platzieren, da häufig das Wägemodul zu gross ist, um entsprechend kleine Abstände einzuhalten.

Eine Reihenanordnung von Wägemodulen offenbaren die DE 102 42 118 A1 und die DE 199 20 494 A1, in welchen in einer Vorrichtung zum Wiegen von pharmazeutischen Behältnissen, insbesondere von Ampullen, vier Wägemodule in einer Reihe angeordnet sind, wobei die Behältnisse vor und nach dem Befüllen den Wägemodulen mittels einer Greifeinrichtung zugeführt und wieder von diesen entnommen werden.

Eine Flächenanordnung von Wägezellen offenbart die JP 01 212327 A, welche eine preisgünstige Methode zur Herstellung einer Vielzahl von mit Dehnmessstreifen als Sensor beaufschlagten Wägezellen aus einer Platte aus Federmaterial beschreibt.

Die US 2003/0218467 A1 offenbart eine Matrixanordnung von Mikrowaagen, die bevorzugt ihren Einsatz in der kombinatorischen Chemie zur Bestimmung von Massen- oder Massenänderungen im Mikrogramm-Bereich finden kann. Die einzelnen Mikrowaagen weisen jeweils einen mechanischen Resonator als Sensor auf, dessen Resonanzverhalten mit einer beaufschlagten Masse oder Massenänderung korreliert wird.

Eine flächige sternförmige Anordnung von Wägemodulen ist in der US 6 615 638 B1 offenbart, welche in einer Kalibriervorrichtung von Mehrkanalpipetten Verwendung findet. Die Anordnung ist dazu geeignet, den Abstand der jeweils zu einem Wägemodul gehörenden Lastträger an den Abstand der Spitzen der zu kalibrierenden Mehrkanalpipette anzupassen. Somit wird ein gleichzeitiges Wiegen der mit der Kalibrierflüssigkeit aus jeweils einem Kanal der Mehrkanalpipette zu befüllenden Gefässe ermöglicht, obwohl die Dimensionen der nach dem Prinzip der elektromagnetischen Kraftkompensation arbeitenden Wägemodule, grösser sind, als der durch die Lastträger einzuhaltende Abstand.

Nachteilig bei den gemäss dem Stand der Technik der US2003/0218467 beschriebenen Mikrowaagen ist, dass sie zwar für den Anwendungsbereich einer Massebestimmung im Mikrogrammbereich, jedoch nicht im Milligramm- bis Grammbereich geeignet sind. Im Falle von Wägemodulen mit im Vergleich zu den Abständen der Zufuhrelemente einer Beschickungsvorrichtung grossen Abmessungen wird bei Einsatz einer komplexen, insbesondere einer mit flächig angeordneten Zufuhrelementen versehenen Beschickungsvorrichtung, auch die im Stand der Technik offenbarte sternförmige Anordnung den Anforderungen nicht gerecht. Da die Längsausdehnung der Wägemodule, sowohl deren Länge als auch die Breite betreffend, häufig grösser ist als der geforderte Abstand der Mittellängsachsen der Lastträger kann lediglich eine begrenzte Anzahl von Wägemodulen um eine vorgesehene und durch die Zufuhrelemente der Beschickungsvorrichtung vorgegebene Fläche für die Anordnung der Lastträger herum platziert werden.

Es ist daher Aufgabe der Erfindung, eine an eine komplexe, mit geringen Abständen der Zufuhrelemente versehene Beschickungsvorrichtung für Wägeguter angepasste Anordnung von Lastträgern und daher eine Anordnung von mit den Lastträgern verbundenen Wägemodulen zur Verfügung zu stellen.

Diese Aufgabe wird mit den Merkmalen des Anspruchs 1 gelöst.

Eine Vorrichtung zum Wiegen gleichgearteter Wägegüter mit einer Mehrzahl von Wägemodulen weist eine gleiche Anzahl von Lastträgern auf. Jeder Lastträger weist eine Mittellängsachse auf und ist vermittels eines Kraftübertragungsgestänges mit jeweils einem Wägemodul verbunden. Die Lastträger befinden sich in einer vorgegebenen räumlichen oder flächigen Anordnung, in welcher die Abstände benachbarter Mittellängsachsen kleiner als die maximale Längsausdehnung der jeweiligen Wägemodule sind. Die Wägemodule sind dabei in mindestens zwei Ebenen übereinander angeordnet und bilden in jeder Ebene eine Reihen- oder eine Flächenanordnung.

Beim Wiegen gleichgearteter Wägegüter oder auch dem so genannten Batch-Wiegen handelt es sich um einen Vorgang bei dem mehrere Lasten individuell zu wiegen sind, sei dies zum Zwecke des Kontrollierens, des Dosierens oder des Abfüllens etc. auf engem Raum. Die Anzahl der Ebenen, auf welchen die Wägemodule angeordnet sein können, hängt von den Abmessungen der Wägemodule und von der geforderten Anzahl der Lastträger ab, wobei letztere wiederum dadurch beeinflusst ist, wie die Wägegüter den Lastträgern zugeführt werden.

In einer bevorzugten Ausgestaltung der Vorrichtung zum Wiegen gleichgearteter Wägegüter sind die Wägemodule einer Ebene gegenüber denjenigen der darunter und/oder der darüber liegenden Ebene in versetzter Position angeordnet.

In diesem Zusammenhang ist ein Lastträger als eine das Wägegut für eine Wägung aufnehmende Vorrichtung beliebiger Form zu betrachten. Im Rahmen der vorgegebenen Anordnung der Lastträger der Vorrichtung zum Wiegen gleichgearteter Wägegüter ist eine gegebene Voraussetzung für die Gestaltung eines Lastträgers, dass ein solcher sich in die vorgegebene räumliche oder flächige Anordnung einpasst, das heisst in seiner räumlichen Ausdehnung beschränkt ist. Häufig sind die Abstände der Lastträger untereinander, das heisst ihrer jeweiligen Mittellängsachsen, sowie deren Anordnung in der Vorrichtung an die Zufuhrelemente einer Beschickungsvorrichtung angepasst. Demnach können die Mittellängsachsen der Lastträger in regelmässigen Abständen zueinander, angeordnet sein. In besonderen Ausführungen sind dabei sämtliche Lastträger in einer Ebene orthogonal zur Richtung der Kraftwirkung einer Last angeordnet oder teilweise vertikal gegeneinander versetzt in mehreren Ebenen angeordnet.

Eine besonders vorteilhafte Ausführungsform der Vorrichtung zum Wiegen gleichgearteter Wägegüter sieht vor, dass ein mit einem auf einer tieferen Ebene angeordneten Wägemodul verbundenes Kraftübertragungsgestänge gegenüber einem Kraftübertragungsgestänge eines Wägemoduls aus einer darüber liegenden Ebene verlängert ist und gegebenenfalls mit einer Hülse zum Schutz des Kraftübertragungsgestänges versehen ist. In diesem Falle ist es erforderlich, die durch die Verlängerung des Kraftübertragungsgestänges bedingten unterschiedlichen Vorlasten für verschiedene Wägemodule zu kompensieren. Dies wird mittels eines Zusatzgewichts bewerkstelligt, das mit dem auslenkbaren Parallelogrammschenkel jeder Wägezelle eines Wägemoduls ohne verlängertes Kraftübertragungsgestänge verbunden ist. Dieses Zusatzgewicht gleicht das Gewicht des verlängerten Kraftübertragungsgestänges aus. Mit einem Zusatzgewicht sind auch solche Wägemodule versehen, deren Verlängerung des Kraftübertragungsgestänges nicht der maximalen Länge eines Kraftübertragungsgestänges in der Vorrichtung entspricht. Ferner kann mittels eines Zusatzgewichts, welches in einer besonders bevorzugten Ausgestaltung eines Wägemoduls auswechselbar ist, dazu dienen, unterschiedliche Waagschalengrössen, d.h. Grössen des Lastträgers, zu kompensieren. Erstere sowie letztere sind bevorzugterweise auswechselbar, um die Vorrichtung zum Wiegen gleichgearteter Wägegüter flexibel einsetzen zu können. Im Rahmen einer vorgegebenen Anwendung der Vorrichtung zum Wiegen gleichgearteter Wägegüter sind die Lastträger der dabei eingesetzten Wägemodule jedoch gleich ausgeformt.

In einer Vorrichtung zum Wiegen gleichgearteter Wägegüter können die Wägemodule verschiedentlich angeordnet sein. Bevorzugterweise sind sämtliche Wägemodule einer Ebene in einer Reihe oder in zwei einander gegenüber liegenden Reihen angeordnet, wobei die Wägemodule der darunter und/oder der darüber liegenden Ebene gegenüber den Wägemodulen einer Reihe translatorisch versetzt angeordnet sein können.

Eine weitere bevorzugte Anordnung der Wägemodule besteht darin, sämtliche Wägemodule einer Ebene sternförmig um die Anordnung der Lastträger zu positionieren, wobei die Wägemodule der darunter und/oder der darüber liegenden Ebene gegenüber diesen Wägemodulen translatorisch und um einen Winkel versetzt angeordnet sind.

In einer vorteilhaften Weiterbildung der Vorrichtung zum Wiegen gleichgearteter Wägegüter sind die Ebenen durch Trägerplattformen voneinander abgetrennt. Insbesondere sind sie durch Stützen voneinander beabstandet.

Die Wägemodule der am tiefsten liegenden Ebene sind bevorzugt auf einer Grundplatte angeordnet. Damit ein Wägemodul passgenau in die Einsatzumgebung, hier auf einer Trägerplattform oder der Grundplatte eingebaut werden kann, ist es wichtig, eine Vorrichtung zur Positionierung des Wägemoduls vorzusehen, deren Position in räumlichem Bezug zur Position des Lastträgers steht. Idealerweise sind der Lastträger und die Vorrichtung zur Positionierung des Wägemoduls auf derselben Mittellängsachse angeordnet. Die Positioniervorrichtung wirkt mit einem entsprechenden Gegenstück der Trägerplattform oder der Grundplatte zusammen.

Insbesondere sind die Wägemodule in der Vorrichtung zum Wiegen gleichgearteter Wägegüter derart angeordnet, dass sie einzeln auswechselbar sind, was bedeutet, dass sie bevorzugt gleichgeartet ausgestaltet sind. Dies erhöht die Servicefreundlichkeit einer solchen Vorrichtung zum Wiegen gleichgearteter Wägegüter. Für ein einfaches Auswechseln einzelner Wägemodule kann es ferner erforderlich sein, das Kraftübertragungsgestänge vom Wägemodul trennbar auszugestalten.

Bei der Beschickung der Lastträger mittels einer Beschickungsvorrichtung, kann bei fehlerhafter Funktion der Beschickungsvorrichtung eine Überlast oder eine Querlast in beliebiger Richtung auf die Lastträger, damit auf das Kraftübertragungsgestänge und auf die Wägezelle eines Wägemoduls appliziert werden. Die Wägemodule für den Einsatz in einer oben genannten Vorrichtung benötigen daher eine Überlastsicherung, die eine Überlast in Lastrichtung, Querkräfte orthogonal zur Lastrichtung sowie eventuell auch Drehmomente von der Wägezelle entkoppelt. Daher ist jeder Lastaufnehmer, insbesondere das Kraftübertragungsgestänge für ein Wägemodul mit einer Überlastschutzsicherung versehen. In einer hier beschriebenen Vorrichtung zum Wiegen gleichgearteter Wägegüter umfasst ein Lastaufnehmer mindestens ein Kraftübertragungsgestänge und einen Lastträger.

Jedes Wägemodul der Vorrichtung zum Wiegen gleichgearteter Wägegüter ist von einem Gehäuse umgeben, welches derart ausgeformt ist, dass es sich in Richtung des Lastaufnehmers von den Seiten her und/oder von oben her verjüngt. Auf diese Weise wird dem geringen Platzbedarf in einer sternförmigen Anordnung Rechnung getragen. Auch kann die Verteilung der Wärme innerhalb des Gehäuses dahingehend optimiert werden, dass sie durch die Verjüngung des Gehäuses von oben vom Lastaufnehmer fern gehalten wird.

In einem Verfahren zum Wiegen gleichgearteter Wägegüter mit einer erfindungsgemässen Vorrichtung werden die Wägegüter vermittels einer Beschickungsvorrichtung entweder gleichzeitig auf die Lastträger aufgebracht oder gleichzeitig auf die Lastträger einer Reihe aus einer Matrix von gleich beabstandeten Lastträgern oder nacheinander auf jeden Lastträger einer Anordnung von Lastträgern.

Die Vorrichtung zum Wiegen gleichgearteter Wägegüter ist geeignet für das Dosieren von Pulvern in dafür geeignete Gefässe, das Befüllen von Hartgelatinekapseln, das Befüllen von Ampullen oder Phiolen und insbesondere auch für die Kontrolle einzelner, relativ teurer kleiner Teile sowie gegebenenfalls bereits abgefüllter oder verpackter Wägegüter. Beim Wiegen können die Wägegüter vermittels einer Beschickungsvorrichtung gleichzeitig auf sämtliche Lastträger oder gleichzeitig auf die Lastträger einer Reihe aus einer Matrix von gleich beabstandeten Lastträgern oder nacheinander auf die Lastträger aufgebracht werden. Auch das aufeinander folgende Aufbringen verschiedener Wägegüter auf jeden Lastträger der Vorrichtung, beispielsweise beim Lösen von Pulvern in einer Flüssigkeit ist mit der Vorrichtung zum Wiegen gleichgearteter Wägegüter möglich.

Die Erfindung wird anhand von Beispielen, wie sie schematisch in den Zeichnungen dargestellt sind, im Folgenden beschrieben. Es zeigen:
- Figur 1: eine perspektivische Darstellung einer Vorrichtung zum Wiegen gleichgearteter Wägegüter, wobei die Wägemodule in jeweils zwei Reihen parallel nebeneinander und auf drei Ebenen übereinander angeordnet sind;
- Figur 2: eine perspektivische Darstellung eines am Kraftübertragungsgestänge eines Lastaufnehmers angebrachten Lastträgers für ein Wägemodul einer Vorrichtung gemäss Figur 1;
- Figur 3: eine Vorrichtung gemäss der in Figur 1 gezeigten mit einer Beschickungsvorrichtung in der Seitenansicht, wobei hier die Lastträger vertikal zueinander versetzt angeordnet sind;
- Figur 4: eine Seitenansicht einer anderen Ausführungsform einer Vorrichtung zum Wiegen gleichgearteter Wägegüter;
- Figur 5: eine weitere Ausführungsform einer Vorrichtung zum Wiegen gleichgearteter Wägegüter in perspektivischer Darstellung, wobei die Wägemodule in jeder Ebene sternförmig um den Bereich einer Lastträgermatrix angeordnet sind;
- Figur 6: die Vorrichtung aus Figur 5 mit angebrachten Lastträgern in der Aufsicht, wobei die die Ebenen voneinander trennenden Trägerplattformen und die Grundplatte weggelassen wurden;
- Figur 7: ein einzelnes Wägemodul ohne Gehäuse in der Seitenansicht;
- Figur 8: eine perspektivische Sicht auf die dem Lastaufnehmer abgewandte Seite eines Wägemoduls im Bereich seiner Befestigung an einer Grundplatte oder einer Trägerplattform als Ausschnittzeichnung;
- Figur 9: eine perspektivische Sicht auf die Seite des Lastaufnehmers eines Wägemoduls im Bereich seiner Befestigung an einer Grundplatte oder einer Trägerplattform als Ausschnittzeichnung.

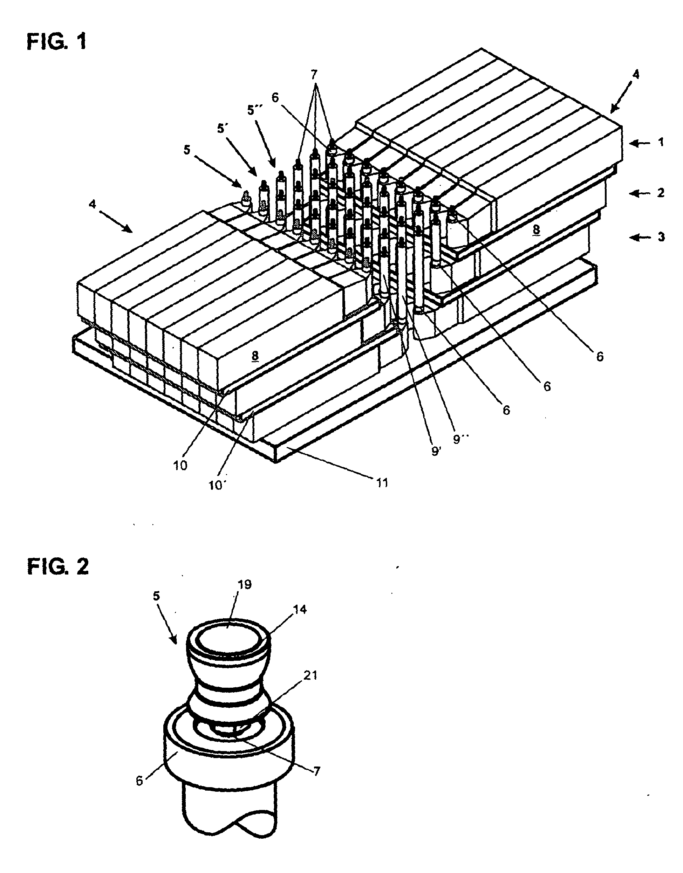

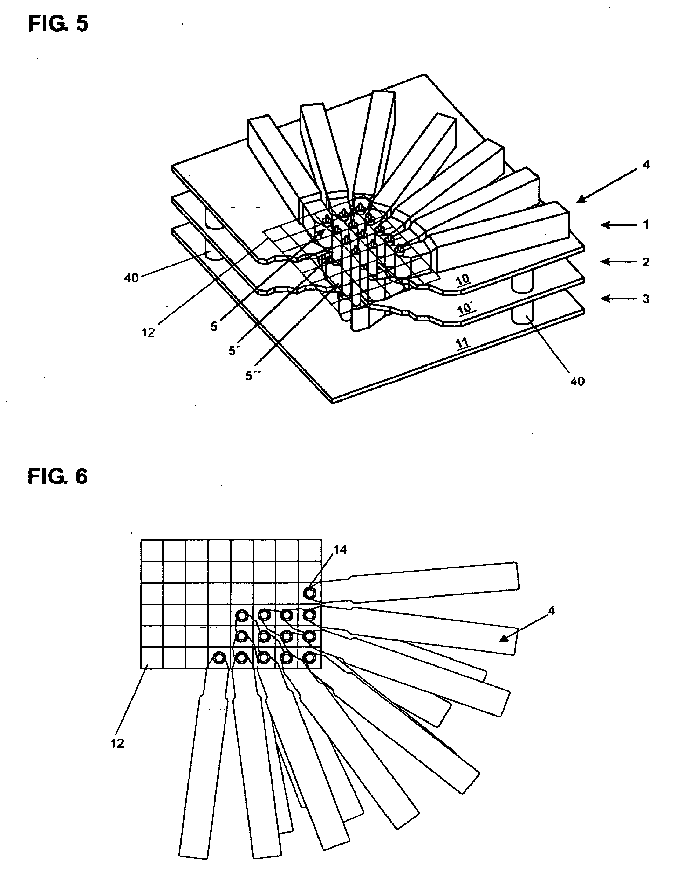

In der Figur 1 ist in dreidimensionaler Darstellung eine Vorrichtung zum Wiegen gleichgearteter Wägegüter gezeigt, welche aus insgesamt achtundvierzig einzelnen Wägemodulen 4 aufgebaut ist. Diese sind in drei Ebenen 1, 2, 3 übereinander angeordnet und bilden in jeder Ebene 1, 2, 3 zwei Reihen aus parallel zueinander verlaufenden Wägemodulen 4, wobei die Wägemodule 4 der ersten Ebene 1 gegenüber denjenigen der zweiten Ebene 2 translatorisch, hier in Richtung der Länge eines Wägemoduls 4, versetzt sind. Ein hier gezeigtes Wägemodul 4 besitzt eine grosse Längsausdehnung in Richtung seiner Länge im Vergleich zur Längsausdehnung in Richtung seiner Breite. Die Ursache dafür wird weiter unten anhand der Figur 6 erläutert.

Jedes Wägemodul weist einen Lastaufnehmer 5, 5', 5" auf, wobei die Lastaufnehmer 5, 5', 5" in regelmässigen Abständen zueinander angeordnet sind. Ein Lastaufnehmer 5, 5', 5" umfasst mindestens ein Kraftübertragungsgestänge sowie einen Lastträger, wobei der Lastträger (siehe Figur 2) vermittels eines hier nicht sichtbaren Kraftübertragungsgestänges mit dem Lastaufnahmebereich einer hier ebenfalls nicht gezeigten Wägezelle im Inneren des Gehäuses 8 eines jeden Wägemoduls 4 verbunden ist. Die Lastträger sind in der Figur 1 durch einen Aufsatzbolzen 7, sozusagen als Ende des Kraftübertragungsgestänges, angedeutet. Dies ist im Zusammenhang mit der gezeigten Vorrichtung zum Wiegen gleichgearteter Wägegüter insofern von Bedeutung, als dass ein beliebiger Lastträger beziehungsweise eine beliebige Waagschale - sofern deren Abmessungen kleiner als der Abstand benachbarter Lastaufnehmer 5, 5', 5" ist - am Aufsatzbolzen 7 angebracht werden kann, wodurch der spezifischen Anwendung der Vorrichtung zum Wiegen gleichgearteter Wägegüter Rechnung getragen werden kann. Eine Waagschale, wie sie beispielsweise zur Aufnahme einer zu befüllenden pharmazeutischen Hartgelatinekapsel geeignet ist, ist in der Figur 2 abgebildet. Ein in der Figur 1 gezeigter Lastaufnehmer 5, 5', 5" weist jeweils ein Basiselement 6 auf, welches, das Kraftübertragungsgestänge schützend umgibt.

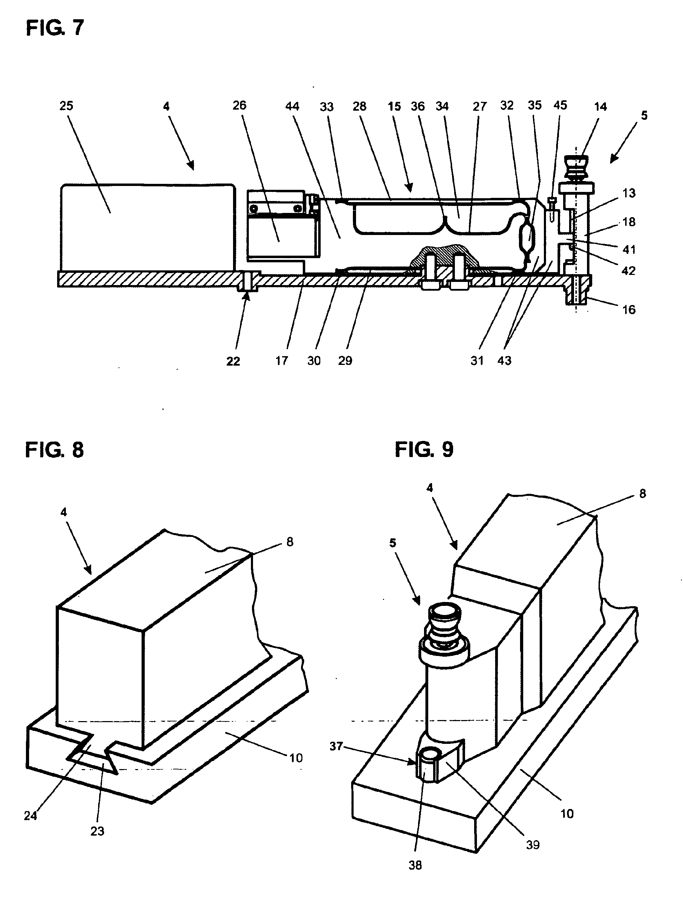

Die mit den Wägemodulen der zweiten Ebene 2 und der dritten Ebene 3 verbundenen Lastaufnehmer 5', 5" sind gegenüber jenen der ersten Ebene 1 verlängert, so dass sämtliche Aufsatzbolzen 7 beziehungsweise auf diesen angebrachte Waagschalen, beispielsweise wie in der Figur 2 gezeigt, in einer zur Richtung der Schwerkraft orthogonalen Ebene angeordnet sind. Die Verlängerung des Lastaufnehmers 5', 5" beinhaltet ein verlängertes Kraftübertragungsgestänge (hier nicht sichtbar) sowie eine dieses umgebende Hülse 9, 9'. Zum Ausgleich der durch das verlängerte Kraftübertragungsgestänge auf den Lastaufnahmebereich einer Wägezelle wirkenden verschiedenen Massen weisen die Wägemodule der ersten Ebene 1 ein erstes Zusatzgewicht und die Wägemodule der zweiten Ebene ein zweites Zusatzgewicht auf, wodurch die Massendifferenz, hervorgerufen durch das verlängerte Kraftübertragungsgestänge eines Wägemoduls der zweiten Ebene 2 bzw. der dritten Ebene 3 gerade kompensiert wird. Ein solches Zusatzgewicht sowie seine Anordnung an einem Wägemodul ist in der Figur 7 gezeigt.

Die Wägemodule einer jeweiligen Reihe einer Ebene sind auf jeweils einer Trägerplattform 10, 10' befestigt. Dabei trennt die Trägerplattform 10 die erste Ebene 1 von der zweiten Ebene 2, beziehungsweise die Trägerplattform 10' die zweite Ebene 2 von der dritten Ebene 3. Eine hier durchgängig ausgestaltete Grundplatte 11 trägt den gesamten Aufbau der Vorrichtung zum Wiegen gleichgearteter Wägegüter. Die Trägerplattformen 10, 10' sind in bekannter, hier in der Figur 1 nicht näher ausgeführten Weise mit der Grundplatte 11 verbunden um der gesamten Vorrichtung zum Wiegen gleichgearteter Wägegüter die notwendige Stabilität zu verleihen.

In der in Figur 1 gezeigten Vorrichtung zum Wiegen gleichgearteter Wägegüter entspricht die Breite eines Wägemoduls 4 beziehungsweise dessen Gehäuse 8 gerade dem Abstand zweier Lastaufnehmer 5, 5', 5" beziehungsweise deren Lastträger innerhalb einer Reihe, welche sich in der Richtung senkrecht zur Länge eines Wägemoduls 4 erstreckt. Der Abstand der Lastaufnehmer 5, 5', 5" in Richtung der Länge eines Wägemoduls 4 ist durch den Versatz der Wägemodule 4 verschiedener Ebenen vorgegeben. Dieser Versatz ist hier in Richtung der Länge eines Wägemoduls 4 erfolgt, wodurch die Lastträger der Lastaufnehmer 5, 5', 5" eine Matrixanordnung mit sechs mal acht gleich grossen Feldern bilden. Ein lateraler Versatz könnte jedoch zusätzlich noch seitlich, das heisst in Richtung senkrecht zur Länge eines Wägemoduls erfolgen, wodurch die Lastträger nebeneinander liegender Reihen gegeneinander versetzt wären.

Das Gehäuse 8 eines jeden Wägemoduls 4 verjüngt sich zum Lastaufnehmer 5, 5', 5" hin. Dies ermöglicht auch andere Anordnungen der Wägemodule 4 in Bezug auf eine Lastträgermatrix, wie weiter unten anhand der Figuren 5 und 6 im Detail beschrieben wird.

In der Figur 2 ist in einer perspektivischen Darstellung ein an einem Lastaufnehmer 5 angebrachter Lastträger gezeigt. Es handelt sich dabei um eine Waagschale 14, die zur Aufnahme von zu befüllenden Hartgelatinekapseln geeignet ist. Mittels eines Befestigungselements in Form einer Sechskantmutter 21 mit Innengewinde ist die Waagschale 14 auf einen Aufnahmebolzen 7, welcher in diesem Fall über ein Aussengewinde verfügt, aufgeschraubt. Die Waagschale 14 weist im Verhältnis zu ihrem Durchmesser eine grosse Höhe auf, wodurch die Öffnung 19, welche die Hartgelatinekapsel, jedoch auch eine andere Probe oder ein Probengefäss, beispielsweise eine Phiole, aufnimmt, tief ausgeformt sein kann. Auf diese Weise kann eine stabile Positionierung der Probe oder des Probengefässes erreicht werden.

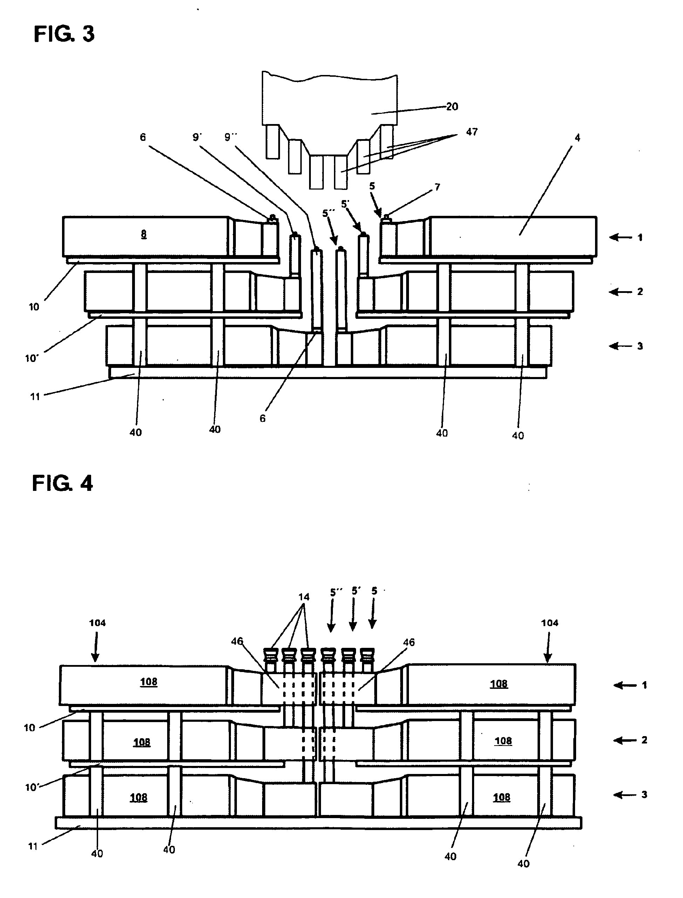

Die Figur 3 zeigt eine Vorrichtung zum Wiegen gleichgearteter Wägegüter ähnlich der in Figur 1 gezeigten in der Seitenansicht. Hier ist der Versatz in Richtung der Längsausdehnung eines Wägemoduls 4, welcher dem Abstand der Lastaufnehmer 5, 5', 5" zweier Reihen entspricht, deutlich zu erkennen. Im Gegensatz zu den in der Figur 1 dargestellten Wägemodulen 4, sind die hier gezeigten Wägemodule 4 mit Lastaufnehmern 5, 5', 5" verbunden, durch welche die Lastträger vertikal zueinander versetzt angeordnet sind. Das heisst, die betreffenden Verlängerungselemente der Lastaufnehmer 5, 5', 5" weisen hier von den in Figur 1 gezeigten verschiedene Verlängerungen des Kraftübertragungsgestänges sowie diese umgebende Hülsen 9', 9" auf.

Inwiefern die Lastträger der Lastaufnehmer 5, 5', 5" in einer Ebene oder vertikal gegeneinander versetzt angeordnet sind, hängt von der Anordnung der Zufuhrelemente 47 einer Beschickungsvorrichtung ab, welche die zu wiegenden Güter den einzelnen Lastträgern zuführen. Eine Beschickungsvorrichtung 20 sei hier schematisch angedeutet, wobei diese allerdings nicht Gegenstand der Erfindung ist.

Die Trägerplattformen 10, 10' stützen sich auf der Grundplatte 11 über Säulen 40 ab, wobei deren Befestigung in beliebiger, an sich bekannter Weise erfolgen kann.

Die Figur 4 zeigt eine Seitenansicht einer Vorrichtung zum Wiegen gleichgearteter Wägegüter, wobei die in den drei Ebenen 1, 2, 3 angeordneten Wägemodule 104 nicht gegeneinander versetzt sind. Dennoch bilden die den jeweiligen Wägemodulen zugehörigen Lastträger, hier als die in der Figur 2 gezeigte Waagschale 14 ausgestaltet, eine flächige Anordnung, da die Kraftübertragungsgestänge der Lastaufnehmer 5, 5', 5" der Wägemodule 104 aus verschiedenen Ebenen 1, 2, 3 an jeweils unterschiedlichen Positionen mit dem Lastaufnahmebereich des auslenkbaren Parallelogramm-Schenkels (hier nicht sichtbar, siehe Figur 7) der betreffenden Wägezelle verbunden sein können. Zu diesem Zweck weist beispielsweise dieser Parallelogramm-Schenkel eine Verlängerung in Richtung der Längserstreckung des Wägemoduls 104 aus, so dass am Lastaufnahmebereich drei Aufnahmepositionen für ein Kraftübertragungsgestänge vorhanden sind. Eine solche Verlängerung kann jedoch auch durch einen horizontal verlaufenden Teil des Kraftübertragungsgestänges ausgebildet sein, wobei dieser für Wägemodule 104 verschiedener Ebenen 1, 2, 3 sich über eine unterschiedliche Länge erstreckt. Infolge der Verlängerung weist das Gehäuse 108 des Wägemoduls 104 im betreffenden Bereich ebenfalls eine Verlängerung 46 auf. Die Lastaufnehmer 5', 5" der Wägemodule 104 aus den unteren Ebenen 3, 2 durchdringen das Gehäuse 108 der darüber angeordneten Wägemodule 104 und gegebenenfalls auch die auslenkbaren Parallelogramm-Schenkel derselben. Dies ist in der Figur 4 durch die unterbrochenen Linien angedeutet. Hierfür sind entsprechende Bohrungen (hier nicht gezeigt) vorzusehen.

In der Figur 5 ist eine weitere Ausführungsform einer Vorrichtung zum Wiegen gleichgearteter Wägegüter in perspektivischer Darstellung gezeigt, wobei die Wägemodule 4 in jeder Ebene 1, 2, 3 sternförmig um den Bereich der Lastträgermatrix 12 (hier durch ein Rasterfeld zeichnerisch angedeutet) angeordnet sind, wie in der Zeichnung anhand der ersten Ebene 1 zum Ausdruck kommt. In der Darstellung sind der Übersichtlichkeit halber nurmehr dreizehn von achtundvierzig Wägemodulen 4 gezeigt; die Anordnung der restlichen Wägemodule 4 erschliesst sich dem Fachmann von selbst. Auch hier sind die Wägemodule 4 lateral gegeneinander versetzt, um die matrixartige Anordnung der Lastträger zu gewährleisten. Die Trägerplatten 10, 10' sind im Bereich der Lastträgermatrix 12 gebrochen gezeichnet, um die darunter liegenden zweite Ebene 2 und dritte Ebene 3 anzudeuten. Im Bereich des Durchtritts eines Lastaufnehmers durch die Trägerplatten 10, 10' weisen diese eine Öffnung auf, die entweder für jeden Lastaufnehmer 5', 5" individuell ausgeformt sein kann oder in einer gemeinsamen Öffnung für die Lastaufnehmer 5', 5"der Wägemodule der darunter liegenden Ebenen 2, 3 ausgebildet sein kann.

Die Lastträger der Wägemodule 4 der dritten Ebene 3 sind im Zentrum der Lastträgermatrix 12 angeordnet, diejenigen der zweiten Ebene 2 in einem Zwischenbereich und diejenigen der ersten Ebene 1 im äusseren Bereich der Lastträgermatrix 12. Selbstverständlich wäre auch der umgekehrte Fall realisierbar.

Eine solche sternförmige Anordnung ist besonders dann vorteilhaft, wenn die Breite der Wägemodule 4 die Abstände der Lastaufnehmer 5, 5', 5" und insbesondere der Lastträger übersteigt, wobei es sich als nützlich erwiesen hat, wenn die Gehäuse 8 der Wägemodule 4 sich zum Lastaufnehmer 5, 5', 5" hin hinsichtlich ihrer Breite verjüngen. Eine weitere Form der Verjüngung des Gehäuses 8 eines Wägemoduls 4 in vertikaler Richtung ist ebenfalls in den Figuren 1, 3 und 4 zu sehen.

Figur 6 zeigt eine Aufsicht auf eine sternförmige Anordnung der Wägemodule 4 in mehreren - hier drei - Ebenen übereinander. Der Übersichtlichkeit halber wurden die Trägerplatten 10,10' sowie die Grundplatte 11 hier nicht eingezeichnet. Der laterale Versatz der Wägemodule 4 verschiedener Ebenen 1, 2, 3 besteht hier einerseits in einem translatorischen Versatz insbesondere in Richtung der Längserstreckung der Wägemodule 4 und einem Winkelversatz in Bezug auf die Position des jeweiligen Lastaufnehmers 5, 5', 5". Damit kann auf relativ kleinem Raum eine Matrix 12 von Lastträgern gebildet werden - hier dargestellt durch die Waagschalen 14 - ohne dass die entsprechenden Wägemodule 4 auf die entsprechenden Abmessungen beschränkt sein müssen.

Die Wägegüter, seien dies nun pharmazeutische Kapseln, die befüllt werden, oder andere Güter, beispielsweise pulverförmige oder flüssige Dosiergüter, mit welchen kleine Behältnisse befüllt werden, können nun gleichzeitig gewogen werden oder nacheinander. Es besteht auch die Möglichkeit, beispielsweise in einer Vorrichtung zum Wiegen gleichgearteter Wägegüter, in welcher die Lastträger eine regelmässige Anordnung besitzen, das heisst in einer Lastträgermatrix 12 angeordnet sind, reihen- oder zeilenweise ein gleichzeitiges Wiegen der Wägegüter vorzunehmen. Das gesamthaft gleichzeitige Wiegen ist häufig wegen der damit verbundenen Zeitersparnis vorzuziehen.

Die Figur 7 zeigt in der Seitenansicht ein einzelnes Wägemodul 4, beispielsweise ein solches aus der ersten Ebene 1 (siehe beispielsweise Figur 1) bei abgenommenem Gehäuseoberteil, wobei das Bodenteil 17, im Schnitt gezeichnet ist. Auf dem Bodenteil 17 sind eine Wägezelle 15, die dazugehörende Kraftkompensationsvorrichtung 26 und das Signalverarbeitungsmodul 25 angebracht. Die Wägezelle 15 weist eine, aus einem einstückigen im Wesentlichen quaderförmigen Materialblock ausgebildete Vorrichtung zur Kraftübertragung auf, deren Materialbereiche durch materialfreie Bereiche in Form von dünnen, den Materialblock senkrecht zu seiner ausgedehnten Seitenfläche durchsetzenden Schnittlinien 27 voneinander getrennt sind. Die Materialbereiche bilden ein Parallelogramm mit einem oberen Parallelogramm-Lenker 28 und einem unteren Parallelogramm-Lenker 29, einem feststehenden Parallelogramm-Schenkel 44 und einem auslenkbaren Parallelogramm-Schenkel 43. Parallelogramm-Schenkel 43, 44 und Parallelogramm-Lenker 28, 29 sind über konkav ausgebildete, durch materialfreie Bereiche begrenzte Biegestellen 30, 31, 32, 33 miteinander verbunden. Weitere Materialbereiche im inneren des Materialblocks bilden einen Kraftübertragungshebel 34. Der feststehende Parallelogramm-Schenkel 44 der Wägezelle 15 ist mit dem Bodenteil 17 starr verbunden.

Der auslenkbare Parallelogramm-Schenkel 43 ist über ein längssteifes, biegeelastisches Koppelelement 35 mit dem kurzen Hebelarm eines Hebels 34 verbunden. Dieser stützt sich über ein Biegelager 36 an einem ins Innere des Materialblocks reichenden Abschnitt des feststehenden Parallelogramm-Schenkels 44 ab. Die Bauform einer solchen Vorrichtung zur Kraftübertragung hat den Vorteil einer hohen Festigkeit bei kleinem Bauvolumen. Das Parallelogramm 28, 29, 43, 44, das Koppelelement 35, sowie der Hebel 34 und das Biegelager 36 sind durch materialfreie Bereiche in Form dünner Schnittlinien 27 im Materialblock begrenzt. Diese Schnittlinien 27 werden vorzugsweise mittels Funkenerosion mit einem Erosionsdraht erzeugt. Die Kraftkompensationsvorrichtung 26 ist über eine in dieser Figur nicht dargestellte Hebelverlängerung mit dem Kraftübertragungshebel 34 gekoppelt.

Am auslenkbaren Parallelogramm-Schenkel 43 ist in mittlerer Höhe eine in vom feststehenden Parallelogramm-Schenkel 44 abgewandte Richtung weisende Lasche 41 ausgebildet. Ein Kraftübertragungsgestänge 13 ist mit einem Befestigungselement 42, beispielsweise einem Schraubbolzen an der Lasche 41 festgeschraubt und steht parallel zur ausgedehnten Seitenfläche des Materialblocks und orthogonal zur Längsrichtung der Parallelogramm- Lenker 28, 29. Lasche 41 und Befestigungselement 42 bilden hier somit den Lastaufnahmebereich des auslenkbaren Parallelogramm-Schenkels 43. An dem der Lasche 41 abgewandten Ende des Kraftübertragungsgestänges 13 ist als Lastträger eine Waagschale 14 - hier eine für die Aufnahme von zu befüllenden Hartgelatinekapseln - befestigt. Das Kraftübertragungsgestänge 13 wird teilweise von einem inneren Gehäuseteil 18 umschlossen. Ein Zusatzgewicht 45 in Form einer Schraube ist am auslenkbaren Parallelogramm-Schenkel 43 angebracht. Dieses dient, wie bereits weiter oben im Zusammenhang mit Figur 1 erwähnt, der Kompensation der verlängerten Kraftübertragungsgestänge 13 der Lastaufnehmer 5', 5", um für sämtliche Wägemodule 4 eine einheitliche Vorlast einzustellen.

Das Bodenteil 17 weist auf der der Wägezelle 15 abgewandten Seite einen Befestigungsbereich 22 auf, welcher über das Bodenteil 17 vorsteht, und eine ebenfalls vorstehende Positionierungsvorrichtung 16. Besonders vorteilhaft erweist sich die Anordnung dann, wenn die Mittellängsachse der Positionierungsvorrichtung 16 mit der Mittellängsachse des in Betriebsstellung stehenden Lastaufnehmers 5 zusammenfällt. Die Position des Lastaufnehmers 5 wird damit durch die Position der Positionierungsvorrichtung 16, beziehungsweise durch eine der Aufnahme der Positionierungsvorrichtung 16 dienende Ausnehmung, vorzugsweise einer Bohrung, in der hier nicht dargestellten Trägerplattform 10 (siehe Figuren 1 und 3 bis 5) definiert.

Die Wägemodule 4, 104 sind in der Vorrichtung zum Wiegen gleichgearteter Wägegüter derart angeordnet, dass sie einzeln auswechselbar sind. Die bedeutet, dass im Servicefall ein einzelnes Wägemodul 4,104 von der Trägerplattform 10, 10' oder der Grundplatte 11 der betreffenden Ebene 1, 2, 3 entfernt werden und ersetzt werden kann, ohne die Position anderer Wägemodule 4, 104 zu beeinträchtigen. Das positionsgenaue Wiedereinsetzen eines ausgewechselten Wägemoduls 4, 104 wird vermittels der Positionierungsvorrichtung 16 gewährleistet. Diese greift in eine entsprechende Ausnehmung, vorzugsweise eine Bohrung, in der Trägerplattform 10, 10' oder der Grundplatte 11 ein und legt somit die Position des Lastaufnehmers 5, 5', 5" fest. Der Befestigungsbereich 22 greift ebenfalls in eine entsprechende Ausnehmung der Trägerplattform 10, 10' oder der Grundplatte 11 ein und kann gegebenenfalls mit einem Befestigungsmittel, beispielsweise einer Schraube oder einem Bolzen zusätzlich fixiert werden.

In diesem Fall wird die Voraussetzung für ein schnelles problemloses Austauschen der Wägemodule 4, 104 dadurch geschaffen, dass einerseits der Abstand der Trägerplattform 10, 10' von der Grundplatte 11 beziehungsweise der Trägerplattformen 10, 10' untereinander genügend gross gewählt wird.

Ein weiteres Erfordernis der Austauschbarkeit einzelner Wägemodule 4, 104 besteht darin, dass die Lastaufnehmer 5, 5', 5" zumindest teilweise abnehmbar mit der betreffenden Wägezelle15 verbunden sind. Dies kann beispielsweise dadurch erfolgen, dass die Lastaufnehmer 5', 5" eine von den Basiselementen 6 abnehmbaren Verlängerung aufweisen.

In den Figuren 8 und 9 werden weitere Möglichkeiten der Befestigung und Führung eines Wägemoduls 4 auf der jeweiligen Trägerplattform 10, 10' beziehungsweise Grundplatte 11 gezeigt. In der Figur 8, welche den hinteren Bereich, d.h. der dem Lastaufnehmer 5, 5', 5" abgewandte Teil eines Wägemoduls 4 gebrochen gezeichnet darstellt, ist dieses hintere Ende des Wägemoduls 4 auf einer Trägerplattformen 10 mittels einer so genannten Schwalbenschwanzführung befestigt. Dabei weist die Trägerplattform 10 eine Ausnehmung 23 mit trapezförmigem Querschnitt auf, in welche ein mit dem Gehäuse 8 des Wägemoduls 4 verbundener Vorsprung 24 als entsprechendes Gegenstück eingreift und geführt wird. Die Ausnehmung 23 sowie der Vorsprung 24 können sich nun über die gesamte Länge des Gehäuses 8 erstrecken oder nur teilweise, beispielsweise in dessen hinterem Bereich. In letzterem Fall bietet sich für das Fixieren und Führen des Wägemoduls 4 in seinem vorderen Bereich, d.h. dem mit dem Lastaufnehmer 5 versehenen Teil des Wägemoduls 4, eine Rastvorrichtung 37 an, wie sie in der Figur 9 zu sehen ist. Diese Rastvorrichtung 37 weist einen mit der Trägerplattform 10 verbundenen Bolzen 38 auf, den im eingerasteten Zustand eine mit dem Gehäuse 8 des Wägemoduls 4 verbundene Klammer 39 umgreift. Für das Befestigen und Lösen des Wägemoduls 4 von der Trägerplattform 10 ist es vorteilhaft, wenn die Klammer 39 aus einem federnden Material besteht. Eine solche Rastvorrichtung kann im Übrigen auch auf der Mittellängsachse des Lastträgers angeordnet sein. Bei der hier beschriebenen Befestigungsart eines Wägemoduls 4 kann der Abstand der Trägerplattformen 10, 10' voneinander beziehungsweise von der Grundplatte 11 klein gehalten werden, was die Möglichkeit, die Vorrichtung zum Wiegen gleichgearteter Güter kompakt zu gestalten stark verbessert und damit deren Vibrationsempfindlichkeit verringert.

Weitere Ausführungsformen für ein einfaches Lösen und Befestigen eines Wägezellenmoduls 4, 104 von beziehungsweise an einer Trägerplattform 10, 10' oder der Grundplatte 11 sind denkbar und dem Fachmann ohne weiteres erschliessbar.

Die erfindungsgemässe Vorrichtung zum Wiegen gleichgearteter Wägegüter wurde in einer bevorzugten Ausgestaltung beschrieben und dargestellt. Anhand der erfindungsgemässen Lehre sind jedoch weitere fachmännische Ausgestaltungen realisierbar.

### Bezugszeichenliste

- 1: erste Ebene
- 2: zweite Ebene
- 3: dritte Ebene
- 4, 104: Wägemodul
- 5, 5', 5": Lastaufnehmer
- 6: Basiselement
- 7: Aufsatzbolzen
- 8, 108: Gehäuse
- 9,9': Hülse
- 10, 10': Trägerplattform
- 11: Grundplatte
- 12: Lastträgermatrix
- 13: Kraftübertragungsgestänge
- 14: Waagschale
- 15: Wägezelle
- 16: Positioniervorrichtung
- 17: Bodenteil
- 18: inneres Gehäuseteil
- 19: Öffnung der Waagschale
- 20: Beschickungsvorrichtung
- 21: Sechskantmutter
- 22: Befestigungsbereich
- 23: Ausnehmung
- 24: Vorsprung
- 25: Signalverarbeitungsmodul
- 26: Kraftkompensationsvorrichtung
- 27: Schnittlinien
- 28: oberer Parallelogramm-Lenker
- 29: unterer Parallelogramm-Lenker
- 30: Biegestelle
- 31: Biegestelle
- 32: Biegestelle
- 33: Biegestelle
- 34: Kraftübertragungshebel
- 35: Koppelelement
- 36: Biegelager
- 37: Rastvorrichtung
- 38: Bolzen
- 39: Klammer
- 40: Säule
- 41: Lasche
- 42: Befestigungselement
- 43: auslenkbarer Parallelogramm-Schenkel
- 44: feststehender Parallelogramm-Schenkel
- 45: Zusatzgewicht
- 46: Verlängerung des Gehäuses 108
- 47: Zufuhrelemente

## Patentansprüche

1. Vorrichtung zum Wiegen gleichgearteter Wägegüter mit einer Mehrzahl von Wägemodulen (4, 104) und einer gleichen Anzahl von eine in Lastrichtung verlaufende Mittellängsachse aufweisenden Lastträgern (14), die je mittels eines Kraftübertragungsgestänges (13) mit jeweils einem Wägemodul (4, 104) verbunden sind, und sich in einer vorgegebenen räumlichen oder flächigen Anordnung befinden, in welcher die Abstände benachbarter Mittellängsachsen kleiner als die maximale Längsausdehnung der jeweiligen Wägemodule (4, 104) sind, **dadurch gekennzeichnet, dass** die Wägemodule (4, 104) in mindestens zwei Ebenen (1, 2, 3) übereinander angeordnet sind, in welchen die Wägemodule (4, 104) jeweils eine Reihen- und/oder Flächenanordnung bilden.

2. Vorrichtung nach Anspruch 1, **dadurch gekennzeichnet, dass** die Wägemodule (4, 104) einer Ebene (1, 2, 3) gegenüber denjenigen der darunter und/oder der darüber liegenden Ebene (1, 2, 3) in versetzter Position angeordnet sind.

3. Vorrichtung nach Anspruch 1 oder 2, **dadurch gekennzeichnet, dass** die Abstände der Mittellängsachsen der Lastträger (14) untereinander sowie deren Anordnung in der Vorrichtung an die Zufuhrelemente (47) einer Beschickungsvorrichtung (20) angepasst sind.

4. Vorrichtung nach Anspruch 1, 2 oder 3, **dadurch gekennzeichnet, dass** die Mittellängsachsen der Lastträger (14) in regelmässigen Abständen zueinander angeordnet sind.

5. Vorrichtung nach einem der Ansprüche 1 bis 4, **dadurch gekennzeichnet, dass** sämtliche Lastträger (14) in einer Ebene orthogonal zur Richtung der Kraftwirkung einer Last angeordnet sind.

6. Vorrichtung nach einem der Ansprüche 1 bis 4, **dadurch gekennzeichnet, dass** die Lastträger (14) teilweise vertikal gegeneinander versetzt in mehreren Ebenen angeordnet sind.

7. Vorrichtung nach einem der Ansprüche 1 bis 6, **dadurch gekennzeichnet, dass** ein mit einem auf einer tiefer liegenden Ebene (1, 2, 3) angeordneten Wägemodul (4, 104) verbundenes Kraftübertragungsgestänge (13) gegenüber einem Kraftübertragungsgestänge eines Wägemoduls (4, 104) aus einer darüber liegenden Ebene (1, 2, 3) eine Verlängerung aufweist.

8. Vorrichtung nach Anspruch 7, **dadurch gekennzeichnet, dass** ein Wägemodul (4, 104) eine Wägezelle (15) mit einem feststehenden (44) und mit einem vertikal auslenkbaren Parallelogramm-Schenkel (43) aufweist und dass ein Zusatzgewicht (45) mit dem auslenkbaren Parallelogramm-Schenkel (43) eines Wägemoduls (4, 104) verbunden ist, welches das Gewicht des verlängerten Kraftübertragungsgestänges (13) bei einem Wägemodul ohne verlängertes Kraftübertragungsgestänge (13) ausgleicht.

9. Vorrichtung nach einem der Ansprüche 1 bis 8, **dadurch gekennzeichnet, dass** sämtliche Wägemodule (4, 104) einer Ebene (1, 2, 3) in einer oder in zwei einander gegenüber liegenden Reihen angeordnet sind, und die Wägemodule (4, 104) der darunter und/oder darüber liegenden Ebene (1, 2, 3) gegenüber den Wägemodulen (4, 104) der Reihe translatorisch versetzt angeordnet sind.

10. Vorrichtung nach einem der Ansprüche 1 bis 8, **dadurch gekennzeichnet, dass** sämtliche Wägemodule (4, 104) einer Ebene (1, 2, 3) sternförmig angeordnet sind, wobei die Wägemodule (4, 104) der darunter und/oder darüber liegenden Ebene (1, 2, 3) gegenüber diesen Wägemodulen (4, 104) translatorisch und um einen Winkel versetzt angeordnet sind.

11. Vorrichtung nach einem der Ansprüche 1 bis 10, **dadurch gekennzeichnet, dass** die Ebenen durch Trägerplattformen (10, 10') voneinander abgetrennt sind und durch Stützen voneinander beabstandet sind.

12. Vorrichtung nach Anspruch 10 oder 11, **dadurch gekennzeichnet, dass** diese auf einer Grundplatte (11) angeordnet ist, und dass jedes Wägemodul (4, 104) eine Positioniervorrichtung (16, 22, 24, 39) aufweist, die mit einem entsprechenden Gegenstück (23; 38) der Trägerplattform (10, 10') oder der Grundplatte (11) zusammenwirkt.

13. Vorrichtung nach Anspruch 12, **dadurch gekennzeichnet, dass** die Positioniervorrichtung (16, 39) auf der Mittellängsachse des Lastträgers (14) angeordnet ist.

14. Vorrichtung nach einem der Ansprüche 1 bis 13, **dadurch gekennzeichnet, dass** jeder Lastträger (14) eines Wägemoduls (4, 104) mit einer Überlastschutzsicherung versehen ist.

15. Vorrichtung nach einem der Ansprüche 1 bis 14, **dadurch gekennzeichnet, dass** jedes Wägemodul (4, 104) ein Gehäuse (8, 108) aufweist welches derart ausgeformt ist, dass es sich in der Richtung zum Lastträger (14) und zum Kraftübertragungsgestänge (13) von den Selten her und/oder von oben her verjüngt.

## Claims

1. Device for weighing substantially uniform weighing objects with a plurality of weighing modules (4, 104) and an equal number of load carriers (14) which have a central lengthwise axis oriented in the direction of the load, each of said load carriers (14) being connected with one of the weighing modules (4, 104) by means of a force-transmitting rod (13), wherein said load carriers (14) are disposed in a given spatial or two-dimensional arrangement in which the intervals between neighboring central lengthwise axes are smaller than the maximum dimension of the associated weighing modules (4, 104), **characterized in that** the weighing modules (4, 104) are arranged in at least two planes (1, 2, 3) on top of each other, wherein the respective weighing modules (4, 104) in each plane form a row arrangement and/or a two-dimensional arrangement.

2. Device according to claim 1, **characterized in that** the weighing modules (4, 104) in a plane (1, 2, 3) are arranged in an offset position relative to the weighing modules in the plane (1, 2, 3) below and/or above.

3. Device according to claim 1 or 2, **characterized in that** the distances of the central lengthwise axes of the load carriers (14) from each other as well as their arrangement in the device are matched to the delivery elements (47) of a conveyor device (20).

4. Device according to claim 1, 2 or 3, **characterized in that** the central lengthwise axes of the load carriers (14) are arranged at regular intervals relative to each other.

5. Device according to one of the claims 1 to 4, **characterized in that** all of the load carriers (14) are arranged in a plane that extends orthogonal to the direction of the force vector of a load.

6. Device according to one of the claims 1 to 4, **characterized in that** the load carriers (14) are arranged in part with a vertical offset relative to each other so that they lie in a plurality of planes.

7. Device according to one of the claims 1 to 6, **characterized in that** a force-transmitting rod (13) connected to a weighing module (4, 104) that is arranged on a lower plane (1, 2, 3) has an increased length in relation to a force-transmitting rod (13) connected to a weighing module (4, 104) that is arranged on a plane lying above said lower plane (1, 2, 3).

8. Device according to claim 7, **characterized in that** a weighing module (4, 104) comprises a weighing cell (15) with a stationary parallelogram leg (44) and a vertically displaceable parallelogram leg (43), and **in that** a supplemental weight (45) is connected to the displaceable parallelogram leg (43) of a weighing module (4, 104), said supplemental weight (45) serving to compensate for the absence of the weight of said increased length in a weighing module that is not equipped with a force-transmitting rod of increased length.

9. Device according to one of the claims 1 to 8, **characterized in that** all weighing modules (4, 104) of a plane (1, 2, 3) are arranged in one row or in two rows that lie opposite each other, and **in that** the weighing modules (4, 104) of the plane (1, 2, 3) lying above and/or below are arranged with a translatory offset relative to the weighing modules (4, 104) of the first mentioned plane.

10. Device according to one of the claims 1 to 8, **characterized in that** all weighing modules (4, 104) of a plane (1, 2, 3) are arranged in a star-shaped pattern, wherein the weighing modules (4, 104) of the plane (1, 2, 3) lying above and/or below are arranged with a translatory offset and with an angular offset relative to said weighing modules (4, 104) of the first-mentioned plane.

11. Device according to one of the claims 1 to 10, **characterized in that** the planes are separated from each other by support platforms (10, 10') and spaced apart by support columns.

12. Device according to claim 11, **characterized in that** the device is arranged on a base plate (11) and that each weighing module (4, 104) has a positioning device (16, 22, 24, 39) which cooperates with a matching counterpart (23, 38) of the support platform (10, 10') or the base plate (11).

13. Device according to claim 12, **characterized in that** the positioning device (16, 39) is arranged on the central lengthwise axis of the load carrier (14).

14. Device according to one of the claims 1 to 13, **characterized in that** each load carrier (14) of a weighing module (4, 104) is equipped with an overload protection device.

15. Device according to one of the claims 1 to 14, **characterized in that** each weighing module (4, 104) has a housing (8, 108) designed with a shape which in the direction towards the load carrier (14) and towards the force-transmitting rod (13) narrows down from the sides and/or from above.

## Revendications

1. Dispositif pour peser des objets à peser de même nature comprenant une pluralité de modules de pesée (4, 104) et un nombre identique de supports de charge (14) présentant un axe longitudinal médian disposé dans la direction de charge, qui sont reliés chacun au moyen d'une tringle de transmission de force (13) à respectivement un module de pesée (4, 104), et se trouvent dans un agencement dans l'espace ou en surface prédéfinie, dans lequel les espacements d'axes médians longitudinaux voisins sont inférieurs à l'extension longitudinale maximale des modules de pesée (4, 104) concernés, **caractérisé en ce que** les modules de pesée (4, 104) sont disposés de façon superposée dans au moins deux plans (1, 2, 3), dans lesquels les modules de pesée (4, 104) forment chacun un agencement de série et/ou de surface.

2. Dispositif selon la revendication 1, **caractérisé en ce que** les modules de pesée (4, 104) d'un plan (1, 2, 3) sont disposés dans une position décalée par rapport à ceux du plan situé au-dessous et/ou au-dessous (1, 2, 3).

3. Dispositif selon la revendication 1 ou 2, **caractérisé en ce que** les espacements des axes médians longitudinaux des supports de charge (14) entre eux et leur agencement dans le dispositif sont adaptés aux éléments d'arrivée (47) d'un dispositif d'alimentation (20).

4. Dispositif selon la revendication 1, 2 ou 3, **caractérisé en ce que** les axes longitudinaux médians des supports de charge (14) sont disposés à des intervalles réguliers les uns par rapport aux autres.

5. Dispositif selon l'une quelconque des revendications 1 à 4, **caractérisé en ce que** tous les supports de charge (14) sont disposés dans un plan perpendiculairement à la direction de l'effet de force d'une charge.

6. Dispositif selon l'une quelconque des revendications 1 à 4, **caractérisé en ce que** les supports de charge (14) sont disposés dans plusieurs plans en partie verticalement et décalés les uns par rapport aux autres.

7. Dispositif selon l'une quelconque des revendications 1 à 6, **caractérisé en qu'**une tringle de transmission de force (13) reliée à un module de pesée (4, 104) disposé dans un plan (1, 2, 3) situé plus bas présente un prolongement par rapport à une tringle de transmission de force d'un module de pesée (4, 104) à partir d'un plan (1, 2, 3) situé au-dessus.

8. Dispositif selon la revendication 7, **caractérisé en ce qu'**un module de pesée (4, 104) comporte une cellule de pesée (15) avec une branche à parallélogramme fixe (44) et avec une branche à parallélogramme (43) pouvant être déviée verticalement et **en ce qu'**un poids supplémentaire (45) est relié à la branche à parallélogramme (43) pouvant être déviée d'un module de pesée (4, 104), lequel équilibre le poids de la tringle de transmission de force (13) prolongée dans le cas d'un module de pesée sans tringle de transmission de force (13) prolongée.

9. Dispositif selon l'une quelconque des revendications 1 à 8, **caractérisé en ce que** tous les modules de pesée (4, 104) d'un plan (1, 2, 3) sont disposés dans une rangée ou dans deux rangées se faisant face, et les module de pesée (4, 104) du plan situé au-dessous et/ou au-dessus (1, 2, 3) sont disposés avec un décalage par translation par rapport aux modules de pesée (4, 104) de la rangée.

10. Dispositif selon l'une quelconque des revendications 1 à 8, **caractérisé en ce que** tous les modules de pesée (4, 104) d'un plan (1, 2, 3) sont disposés en forme d'étoile, les modules de pesée (4, 104) du plan situé au-dessous et/ou au-dessus (1, 2, 3) étant disposés par translation en face de ces modules de pesée (4, 104) et avec un décalage d'un angle.

11. Dispositif selon l'une quelconque des revendications 1 à 10, **caractérisé en ce que** les plans sont séparés les uns des autres par des plaques supports (10, 10') et sont espacés les uns des autres par des supports.

12. Dispositif selon la revendication 10 ou 11, **caractérisé en ce que** celui-ci est disposé sur une plaque de base (11), et **en ce que** chaque module de pesée (4, 104) comporte un dispositif de positionnement (16, 22, 24, 39), qui coopère avec une pièce inverse (23, 38) appropriée de la plaque support (10, 10') ou de la plaque de base (11).

13. Dispositif selon la revendication 12, **caractérisé en ce que** le dispositif de positionnement (16, 39) est disposé sur l'axe longitudinal médian dudit support de charge (14).

14. Dispositif selon l'une quelconque des revendications 1 à 13, **caractérisé en ce que** chaque support de charge (14) d'un module de pesée (4, 104) est doté d'une sécurité de protection de surcharge.

15. Dispositif selon l'une quelconque des revendications 1 à 14, **caractérisé en ce que** chaque module de pesée (4, 104) comporte un boîtier (8, 108), qui est formé de telle sorte qu'il se rétrécit en direction du support de charge (14) et en direction de la tringle de transmission de force (13) à partir des côtés et/ou à partir d'en haut.
